# EUROPÄISCHE PATENTSCHRIFT

(11) **EP 0 310 978 B1**
(45) Veröffentlichungstag und Bekanntmachung des Hinweises auf die Patenterteilung: **20.01.1993**
(21) Anmeldenummer: 88116279.6
(22) Anmeldetag: 01.10.1988
(51) Int. Cl.: C08L 67/02, C08K 7/14

(54) **Glasfaserverstärkte thermoplastische Formmassen auf der Basis von Polyestern und Pfropfpolymerisaten**
Glass fibre reinforced thermoplastic moulding compositions based on polyesters and graft polymers
Compositions à mouler thermoplastiques renforcées par des fibres de verre à base de polyesters et de polymères greffés

(30) Priorität: 07.10.1987 DE 3733857
(43) Veröffentlichungstag der Anmeldung: 12.04.1989
(73) Patentinhaber: BASF Aktiengesellschaft, 67063 Ludwigshafen (DE)
(72) Erfinder: Lausberg, Dietrich, Dr., D-6700 Ludwigshafen (DE); Seydl, Wolfgang, Dr., D-6712 Bobenheim-Roxheim (DE); Knoll, Manfred, D-6521 Wachenheim (DE); Seiler, Erhard, Dr., D-6700 Ludwigshafen (DE); Gutsche, Herbert, D-6711 Beindersheim (DE); Kolm, Peter, D-6730 Neustadt (DE)

(56) Entgegenhaltungen:
- FR-A- 2 376 181

## Beschreibung

Die Erfindung betrifft thermoplastische Formmassen, enthaltend als wesentliche Komponenten

### A) 45 bis 90 Gew.% einer Mischung aus

a₁) 50 bis 80 Gew.% eines Polyesters
a₂) 10 bis 25 Gew.% eines Pfropfpolymerisats aufgebaut aus
   a₂₁) 50 bis 90 Gew.% einer Pfropfgrundlage aus einem kautschukelastischen Polymeren auf Basis von
      a₂₁₁) 95 bis 99,9 Gew.% eines C₂-C₁₀-Alkylacrylats und
      a₂₁₂) 0,1 bis 5 Gew.% eines polyfunktionellen Monomeren mit mindestens zwei olefinischen, nicht konjugierten Doppelbindungen
   a₂₂) 10 bis 50 Gew.% einer Pfropfauflage aus
      a₂₂₁) 50 bis 90 Gew.% Styrol oder substituierten Styrolen der allgemeinen Formel I 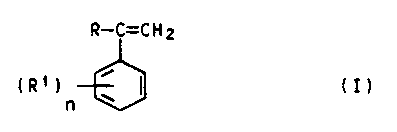 wobei R einen Alkylrest mit 1 bis 8 C-Atomen, ein Wasserstoffatom oder ein Halogenatom und R¹ einen Alkylrest mit 1 bis 8 C-Atomen oder ein Halogenatom darstellen und n den Wert 0, 1, 2 oder 3 hat oder deren Mischungen und
      a₂₂₂) 10 bis 50 Gew.% Acrylnitril oder Methacrylnitril oder deren Mischungen
      a₂₂₃) 0 bis 10 Gew.% Monomeren mit Carboxyl-, Carboxylderivat-, Hydroxyl- oder Epoxygruppen
a₃) 10 bis 25 Gew.% eines Copolymerisats aus
   a₃₁) 55 bis 90 Gew.% Styrol oder substituierten Styrolen der allgemeinen Formel I oder deren Mischungen und
   a₃₂) 10 bis 45 Gew.% Acrylnitril oder Methacrylnitril oder deren Mischungen,
   a₃₃) 0 bis 10 Gew.% Monomeren mit Carboxyl-, Carboxylderivat-, Hydroxyl- oder Epoxygruppen
   und

### B) 5 bis 50 Gew.% Glasfasern, mit der Maßgabe, daß der Anteil der Komponente a₃₂), bezogen auf das Gesamtgewicht der Komponente a₃) um mindestens 5 Gew.% niedriger ist als der Gewichtsanteil der Komponente a₂₂₂), bezogen auf das Gesamtgewicht der Komponente a₂₂).

Außerdem betrifft die Erfindung die Verwendung derartiger Formmassen zur Herstellung von Formkörpern und Formkörper, die aus den erfindungsgemäßen Formmassen als wesentlichen Komponenten erhältlich sind.

In der DE-B-27 58 497 werden thermoplastische Formmassen auf der Basis von Polyestern und modifizierten Styrol/Acrylnitril (SAN)-Copolymeren beschrieben, wobei als Modifizierungsmittel Acrylester und/oder α-Methylstyrol eingesetzt werden. In den Beispielen werden sogenannte ASA-Polymere als modifizierte SAN-Polymere eingesetzt. Falls in diesen Massen das modifizierte SAN-Polymere die Hauptkomponente darstellt, lassen sich vorteilhaft Folien daraus herstellen. Die mechanischen Eigenschaften sind jedoch insgesamt noch nicht voll zufriedenstellend, insbesondere im Hinblick auf die Schlagzähigkeit und Biegefestigkeit.

Der vorliegenden Erfindung lag daher die Aufgabe zugrunde, thermoplastische Formmassen auf der Basis von Polyestern und Pfropfpolymeren zur Verfügung zu stellen, die die vorstehend beschriebenen Nachteile nicht aufweisen.

Diese Aufgabe wird erfindungsgemäß durch die eingangs definierten thermoplastischen Formmassen gelöst.

Als Komponente A enthalten die erfindungsgemäßen Formmassen 45 bis 90, insbesondere 55 bis 90 und besonders bevorzugt 60 bis 85 Gew.% einer Mischung aus
a₁) 50 bis 80 Gew.% eines Polyesters
a₂) 10 bis 25 Gew.% eines Pfropfpolymerisats und
a₃) 10 bis 25 Gew.% eines Styrol-(Meth)-Acrylnitril-Copolymerisats.

Die in den erfindungsgemäßen Formmassen enthaltenen Polyester a₁) sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch C₁-C₄-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer C₂-C₆-Diolkomponente, wie z.B. Polyethylenterephthalat oder Polybutylenterephthalat oder deren Mischungen werden besonders bevorzugt.

Die relative Viskosität η_{spec}/c der Polyester, gemessen an einer 0,5 gew.%igen Lösung in einem Phenol/o-Dichlorbenzolgemisch (Gewichtsverhältnis 3:2) bei 25°C liegt im allgemeinen im Bereich von 1,2 bis 1,8 dl/g.

Der Anteil der Polyester a₁) an der Komponente A beträgt 50 bis 80, vorzugsweise 50 bis 75 und insbesondere 50 bis 70 Gew.%, bezogen auf das Gesamtgewicht der Komponenten a₁)+a₂)+a₃).

Das Pfropfpolymerisat a₂), welches 10 bis 25, insbesondere 12 bis 25, besonders bevorzugt 12 bis 20 Gew.% der Komponente A ausmacht, ist aufgebaut aus
a₂₁) 50 bis 90 Gew.% einer Pfropfgrundlage auf Basis von
   a₂₁₁) 95 bis 99,9 Gew.% eines C₂-C₁₀-Alkylacrylats und
   a₂₁₂) 0,1 bis 5 Gew.% eines polyfunktionellen Monomeren mit mindestens zwei olefinischen, nicht konjugierten Doppelbindungen, und
a₂₂) 10 bis 50 Gew.% einer Pfropfauflage aus
   a₂₂₁) 50 bis 90 Gew.% Styrol oder substituierten Styrolen der allgemeinen Formel I oder deren Mischungen, und
   a₂₂₂) 10 bis 50 Gew.% Acrylnitril oder Methacrylnitril oder deren Mischungen.
   a₂₂₃) 0 bis 10 Gew.% Monomeren mit Carboxyl-, Carboxylderivat-, Hydroxyl- oder Epoxygruppen.

Bei der Komponente a₂₁) handelt es sich um ein Elastomeres, welches eine Glasübergangstemperatur von unter -20, insbesondere unter -30°C aufweist.

Für die Herstellung des Elastomeren werden als Hauptmonomere a₂₁₁) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.%, bezogen auf das Gesamtgewicht a₂₁₁ + a₂₁₂, eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage a₂₁) sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel d₅₀) im Bereich von etwa 200 bis 700, insbesondere von 250 bis 600 nm aufweist. Vorzugsweise hat der Latex eine enge Teilchengrößenverteilung, d.h. der Quotient 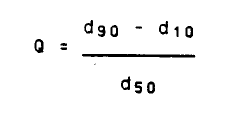
ist vorzugsweise kleiner als 0,5, insbesondere kleiner als 0,35.

Der Anteil der Pfropfgrundlage a₂₁) am Pfropfpolymerisat a₂) beträgt 50 bis 90, vorzugsweise 55 bis 85 und insbesondere 60 bis 80 Gew.%, bezogen auf das Gesamtgewicht von a₂).

Auf die Pfropfgrundlage a₂₁) ist eine Pfropfhülle a₂₂) aufgepfropft, die durch Copolymerisation von
a₂₂₁) 50 bis 90, vorzugsweise 60 bis 90 und insbesondere 65 bis 80 Gew.% Styrol oder substitierten Styrolen der allgemeinen Formel I 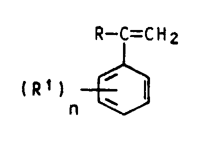 wobei R Alkylreste mit 1 bis 8 C-Atomen, Wasserstoffatome oder Halogenatome und R¹ Alkylreste mit 1 bis 8 C-Atomen oder Halogenatome darstellen und n den Wert 0, 1, 2 oder 3 hat, und
a₂₂₂) 10 bis 50, vorzugsweise 10 bis 40 und insbesondere 20 bis 35 Gew.% Acrylnitril oder Methacrylnitril oder deren Mischungen
a₂₂₃) 0 bis 10 Gew.% Monomeren mit Carboxyl-, Carboxylderivat-, Hydroxyl- oder Epoxygruppen

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Die Pfropfhülle a₂₂) kann in einem oder in mehreren, z.B. zwei oder drei, Verfahrensschritten hergestellt werden, die Bruttozusammensetzung bleibt davon unberührt.

Falls Monomere a₂₂₃) vorhanden sind, beträgt deren Anteil an der Pfropfhülle a₂₂) 0,1 bis 10, vorzugsweise 0,2 bis 10 und insbesondere 0,5 bis 8 Gew.%, bezogen auf das Gesamtgewicht von a₂₂).

Beispiele für Monomere a₂₂₃) sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, tertiäre Ester von Acrylsäure und Methacrylsäure, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Als zweite Gruppe von Monomeren a₂₂₃) sind Lactamgruppen enthaltende Monomere geeignet.

Diese enthalten eine Lactamgruppe der allgemeinen Formel 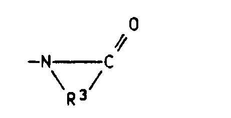
wobei R³ eine verzweigte oder lineare Alkylengruppe mit 2 bis 15 C-Atomen darstellt.

Nur stellvertretend seien hier β-Propiolactame (Azetidin-2-one) der allgemeinen Formel 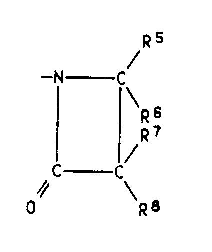
wobei die Substituenten R⁵ bis R⁸ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Beispiele hierfür sind 3,3'-Dimethyl-3-propiolactam, 2-Pyrrolidone 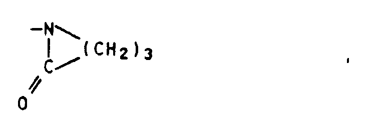
ε-Caprolactam 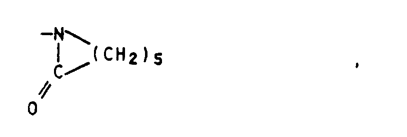
7-Önantholactam, 8-Capryllactam und 12 Laurinlactam, wie sie auch von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen wie in 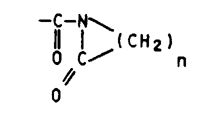
über eine Carbonylgruppe am Stickstoff in die entsprechenden Monomeren eingebaut.

Ein besonders bevorzugtes Beispiel hierfür ist N-(Meth)acryloyl-ε-Caprolactam 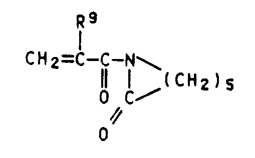
wobei R⁹ ein Wasserstoffatom oder eine Methylgruppe ist.

Bevorzugte Monomere a₂₂₃) sind Glycidylester der Acrylsäure und Methacrylsäure, Maleinsäureanhydrid, tert.-Butylacrylat, Fumarsäure und Maleinsäure.

Vorzugsweise wird die Pfropfhülle in Emulsion hergestellt, wie dies z.B. in der DE-PS 1 260 135, DE-OS 32 27 555, DE-OS 31 49 357, DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril und gegebenenfalls Monomeren a₂₂₃).

Das Pfropfmischpolymerisat (a₂₁+a₂₂) weist im allgemeinen eine mittlere Teilchengröße von 100 bis 1000 nm, im besonderen von 200 bis 700 nm (d₅₀-Gewichtsmittelwert) auf. Die Bedingungen bei der Herstellung des Elastomeren b₁) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat a₂ zählen im Rahmen dieser Erfindung auch die bei der Pfropfmischpolymerisation zur Herstellung der Komponente a₂₂) entstehenden freien, nicht gepfropften Homo- und Copolymerisate.

Nachstehend seien einige bevorzugte Pfropfpolymerisate angeführt:
- a₂/1:: 60 Gew.% Pfropfgrundlage a₂₁) aus

a₂₁₁) 98 Gew.% n-Butylacrylat und
a₂₁₂) 2 Gew.% Dihydrodicyclopentadienylacrylat und 40 Gew.% Pfropfhülle a₂₂) aus
a₂₂₁) 75 Gew.% Styrol und
a₂₂₂) 25 Gew.% Acrylnitril
- a₂/2:: Pfropfgrundlage wie bei a₂/1 mit 5 Gew.% einer ersten Pfropfhülle aus Styrol
und
35 Gew.% einer zweiten Pfropfstufe aus
a₂₂₁) 75 Gew.% Styrol und
a₂₂₂) 25 Gew.% Acrylnitril

- a₂/3:: Pfropfgrundlage wie bei a₂/1 mit 13 Gew.% einer ersten Pfropfstufe aus Styrol und 27 Gew.% einer zweiten Pfropfstufe aus Styrol und Acrylnitril im Gewichtsverhältnis 3:1

Als Komponente a₃) enthalten die erfindungsgemäßen Formmassen 10 bis 25, vorzugsweise 12 bis 20 Gew.% eines Copolymerisats aus
a₃₁) 55 bis 90, vorzugsweise 60 bis 90 und insbesondere 75 bis 90 Gew.% Styrol und/oder substituierten Styrolen der allgemeinen Formel I und
a₃₂) 10 bis 45, vorzugsweise 10 bis 40 und insbesondere 10 bis 25 Gew.% Acrylnitril und/oder Methacrylnitril,
a₃₃) 0 bis 10 Gew.% Monomeren mit Carboxyl-, Carboxylderivat-, Hydroxyl- oder Epoxygruppen.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Bezüglich der Monomeren a₃₃) gilt das vorstehend für die Komponente a₂₂₃) Gesagte, worauf hier zur Vermeidung von Wiederholungen verwiesen wird.

Das Gewichtsverhältnis von a₂:a₃ liegt im Bereich von 1:2,5 bis 2,5:1, vorzugsweise von 1:2 bis 2:1 und insbesondere von 1:1,5 bis 1,5:1.

Wesentlich für die mechanischen Eigenschaften, insbesondere die Schlagzähigkeit der erfindungsgemäßen Formmassen ist es, daß der Gehalt der Komponente a₃) an Acrylnitril und/oder Methacrylnitril, bezogen auf das Gesamtgewicht der Komponente a₃), um mindestens 5 Gew.% niedriger liegt als der Gehalt der Komponente a₂₂) an Acrylnitril und/oder Methacrylnitril (bezogen auf das Gesamtgewicht der Komponente a₂₂).

Als Komponente B enthalten die erfindungsgemäßen Formmassen 5 bis 50, insbesondere 7 bis 45 und besonders bevorzugt 10 bis 40 Gew.%, bezogen auf das Gesamtgewicht der Formmassen, an Glasfasern. Dabei handelt es sich um kommerziell erhältliche Produkte.

Diese haben in der Formmasse im allgemeinen eine mittlere Länge von 0,1 bis 0,5 mm, vorzugsweise von 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxisilanen oder anderen Polymerüberzügen beschichtet sein.

Neben den Komponenten A) und B) können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel und Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des periodischen Systems, z.B. Natrium-, Kalium-, Lithium-Halogenide in Verbindung mit Kupfer-(I)-Halogeniden, z.B. Chlorid, Bromid oder Jodid. Ferner sind geeignete Stabilisatoren sterisch gehinderte Phenole, Hydrochinone, verschiedene substituierte Vertreter dieser Gruppe um Kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis zu 2,0 Gew.%, bezogen auf das Gesamtgewicht der Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 1 Gew.% der thermoplastischen Masse zugesetzt werden, sind Stearinsäuren, Stearylalkohol, Stearinsäureester und -amide.

Ferner können zugesetzt werden organische Farbstoffe wie Nigrosin, Pigmente, z.B. Titandioxid, Cadmiumsulfid, Cadmiumsulfid-selenid, Phthalocyanine, Ultramarinblau oder Ruß.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Masse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.%, bezogen auf die Formmasse, zugesetzt. Färbemittel, wie Farbstoffe und Pigmente können in Mengen bis zu etwa 5 Gew.%, bezogen auf die Formmasse, zugesetzt werden.

Die erfindungsgemäßen thermoplastischen Formmassen können hergestellt werden indem man die Komponenten a₁), a₂) und a₃) mischt, in einem Extruder aufschmilzt und die Glasfasern über einen Einlaß am Extruder zuführt. Derartige Verfahren sind an sich bekannt und in der Literatur beschrieben. Die Mischtemperaturen im Extruder liegen im allgemeinen im Bereich von 240 bis 300°C.

Die erfindungsgemäßen Formmassen zeichnen sich durch eine gute Festigkeit, hohe Schlagzähigkeit und eine besonders gute Oberflächenstruktur der daraus hergestellten Formteile aus.

### Beispiele 1 bis 10

Es wurden folgende Komponenten eingesetzt:
a₁ Polybutylenterephthalat mit einer Viskositätszahl von 108, bestimmt nach DIN 53 728, Teil 3
a₂/1 Pfropfpolymerisat aus 60 Gew.-Teilen einer Mischung aus
   a₂₁₁) 98 Gew.% n-Butylacrylat und
   a₂₁₂) 2 Gew.% Dihydrodicyclopentadienylacrylat
      als Pfropfgrundlage und 40 Gew.% einer Mischung aus
   a₂₂₁) 75 Gew.% Styrol und
   a₂₂₂) 25 Gew.% Acrylnitril als Pfropfauflage.
a₂/2 Pfropfpolymerisat aus 60 Gew.% einer Pfropfgrundlage wie bei a₂/1 und 40 Gew.% einer Pfropfauflage aus
   a₂₂₁) 70 Gew.% Styrol und
   a₂₂₂) 30 Gew.% Acrylnitril
a₂/3 Pfropfpolymerisat aus 60 Gew.% einer Pfropfgrundlage wie bei a₂/1 und 40 Gew.% einer Pfropfauflage aus
   a₂₂₁) 80 Gew.% Styrol und
   a₂₂₂) 20 Gew.% Acrylnitril
a₃/1 Copolymerisat aus
   a₃₁) 81 Gew.% Styrol und
   a₃₂) 19 Gew.% Acrylnitril
      mit einer Viskositätszahl von 100, gemessen in 0,5 gew.%iger Lösung in Dimethylformamid (DMF) bei 25°C
a₃/2 Copolymerisat aus
   a₃₁) 65 Gew.% Styrol und
   a₃₂) 35 Gew.% Acrylnitril
      mit einer Viskositätszahl von 80, gemessen wie bei a₃/1

### B Glasfasern aus E-Glas

Die Komponenten a₁, a₂ und a₃ wurden gemischt, in einem Extruder aufgeschmolzen und die Glasfasern der Schmelze über den Extruder zugeführt. Die Extrusionstemperatur betrug 260°C. Dann wurden die Massen in ein Wasserbad extrudiert, granuliert und getrocknet. Anschließend wurden ohne weitere Nachbehandlung auf einer Spritzgußmaschine Prüfkörper hergestellt.

Die mechanischen Eigenschaften wurden folgendermaßen bestimmt:

| | |
|---|---|
| E-Modul: | DIN 53 457 |
| Schlagzähigkeit aₙ: | DIN 53 453 (bei 23°C) |
| Kerbschlagzähigkeit: | DIN 53 453 (bei 23°C) |

Die Zusammensetzungen der Formmassen und die Ergebnisse der Messungen sind in der Tabelle dargestellt.

**Tabelle**

| (alle Mengenangaben in Gew.%) | | | | | | | |
|---|---|---|---|---|---|---|---|
| Bsp. | Zusammensetzung in Gew.% | | | | Elastizitätsmodul N/mm | Schlagzähigkeit kJ/m² | Kerbschlagzähigkeit kJ/m² |
| | a₁ | a₂ | a₃ | B | | | |
| 1V | 49 | 11 a₂/1 | 10 a₃/2 | 30 | 9300 | 35 | 7,5 |
| 2V | 42 | 14 a₂/1 | 14 a₃/2 | 30 | 9300 | 34 | 8,0 |
| 3 | 49 | 11 a₂/1 | 11 a₃/1 | 30 | 9400 | 42 | 9,5 |
| 4 | 49 | 13 a₂/1 | 8 a₃/1 | 30 | 8600 | 45 | 10,5 |
| 5 | 49 | 11 a₂/2 | 10 a₃/1 | 30 | 9500 | 41 | 9,0 |
| 6V | 49 | 11 a₂/3 | 10 a₃/1 | 30 | 9400 | 33 | 7,0 |
| 7V | 42 | 14 a₂/3 | 14 a₃/1 | 30 | 9200 | 33 | 8,0 |
| 8 | 42 | 14 a₂/1 | 14 a₃/1 | 30 | 9400 | 40 | 10,0 |
| 9 | 42 | 18 a₂/1 | 10 a₃/1 | 30 | 8400 | 47 | 12,0 |
| 10 | 42 | 14 a₂/2 | 14 a₃/1 | 30 | 9400 | 41 | 10,5 |
| V = Vergleichsversuch | | | | | | | |

## Patentansprüche

1. Thermoplastische Formmassen, enthaltend als wesentliche Komponenten
A) 45 bis 90 Gew.% einer Mischung aus
a₁) 50 bis 80 Gew.% eines Polyesters
a₂) 10 bis 25 Gew.% eines Pfropfpolymerisats aufgebaut aus
a₂₁) 50 bis 90 Gew.% einer Pfropfgrundlage aus einem kautschukelastischen Polymeren auf Basis von
a₂₁₁) 95 bis 99,9 Gew.% eines C₂-C₁₀-Alkylacrylats und
a₂₁₂) 0,1 bis 5 Gew.% eines polyfunktionellen Monomeren mit mindestens zwei olefinischen, nicht konjugierten Doppelbindungen
a₂₂) 10 bis 50 Gew.% einer Pfropfauflage aus
a₂₂₁) 50 bis 90 Gew.% Styrol oder substituierten Styrolen der allgemeinen Formel I 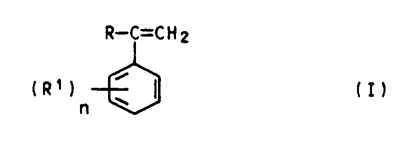 wobei R einen Alkylrest mit 1 bis 8 C-Atomen, ein Wasserstoffatom oder ein Halogenatom und R¹ einen Alkylrest mit 1 bis 8 C-Atomen oder ein Halogenatom darstellen und n den Wert 0, 1, 2 oder 3 hat oder deren Mischungen und
a₂₂₂) 10 bis 50 Gew.% Acrylnitril oder Methacrylnitril oder deren Mischungen
a₂₂₃) 0 bis 10 Gew.% Monomeren mit Carboxyl-, Carboxylderivat-, Hydroxyl- oder Epoxygruppen
und
a₃) 10 bis 25 Gew.% eines Copolymerisats aus
a₃₁) 55 bis 90 Gew.% Styrol oder substituierten Styrolen der allgemeinen Formel I oder deren Mischungen und
a₃₂) 10 bis 45 Gew.% Acrylnitril oder Methacrylnitril oder deren Mischungen,
a₃₃) 0 bis 10 Gew.% Monomeren mit Carboxyl-, Carboxylderivat-, Hydroxyl- oder Epoxygruppen
und
B) 5 bis 50 Gew.% Glasfasern
mit der Maßgabe, daß der Anteil der Komponente a₃₂), bezogen auf das Gesamtgewicht der Komponente a₃) um mindestens 5 Gew.% niedriger ist als der Gewichtsanteil der Komponente a₂₂₂), bezogen auf das Gesamtgewicht der Komponente a₂₂).

2. Thermoplastische Formmassen nach Anspruch 1, enthaltend als wesentliche Komponenten
A) 55 bis 90 Gew.% einer Mischung aus
a₁) 50 bis 80 Gew.% Polyethylenterephthalat oder Polybutylenterephthalat oder deren Mischungen,
a₂) 10 bis 25 Gew.% Pfropfpolymerisat aus
a₂₁) 50 bis 90 Gew.% Pfropfgrundlage auf Basis von
a₂₁₁) 95 bis 99,9 Gew.% n-Butylacrylat und/oder 2-Ethylhexylacrylat und
a₂₁₂) 0,1 bis 5 Gew.% des difunktionellen Monomeren, und
a₂₂) 10 bis 50 Gew.% einer Pfropfauflage aus
a₂₂₁) 50 bis 90 Gew.% Styrol oder α-Methylstyrol oder deren Mischungen und
a₂₂₂) 10 bis 50 Gew.% Acrylnitril oder Methacrylnitril oder deren Mischungen
und
a₃) 10 bis 25 Gew.% eines Copolymerisats aus
a₃₁) 55 bis 90 Gew.% Styrol oder α-Methylstyrol oder deren Mischungen,
a₃₂) 10 bis 45 Gew.% Acrylnitril oder Methacrylnitril oder deren Mischungen,
und
B) 10 bis 40 Gew.% Glasfasern,
mit der Maßgabe, daß der Anteil der Komponente a₃₂), bezogen auf das Gesamtgewicht der Komponente a₃) um mindestens 5 Gew.% niedriger ist als der Gewichtsanteil der Komponente a₂₂₂), bezogen auf das Gesamtgewicht der Komponente a₂₂).

3. Verwendung der thermoplastischen Formmassen gemäß den Ansprüchen 1 und 2 zur Herstellung von Formkörpern und Formteilen.

4. Formkörper, erhältlich aus thermoplastischen Formmassen gemäß den Ansprüchen 1 und 2 als wesentliche Komponenten.

## Claims

1. A thermoplastic molding composition containing as essential components
A) from 45 to 90 % by weight of a mixture of
a₁) from 50 to 80 % by weight of a polyester
a₂) from 10 to 25 % by weight of a graft polymer built up from
a₂₁) from 50 to 90 % by weight of a grafting base comprising an elastomeric polymer based on
a₂₁₁) from 95 to 99.9 % by weight of a C₂-C₁₀-alkyl acrylate
and
a₂₁₂) from 0.1 to 5 % by weight of a polyfunctional monomer having at least two olefinic, non-conjugated double bonds
a₂₂) from 10 to 50 % by weight of a graft surface comprising
a₂₂₁) from 50 to 90 % by weight of styrene or substituted styrene of the general formula I 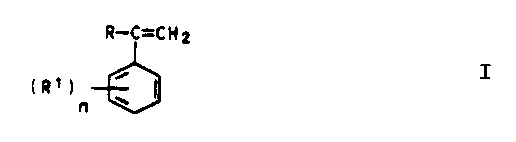 where R is alkyl of from 1 to 8 carbon atoms, hydrogen or halogen, R¹ is alkyl of from 1 to 8 carbon atoms or halogen, and n is 0, 1, 2 or 3, or a mixture thereof, and
a₂₂₂) from 10 to 50 % by weight of acrylonitrile or methacrylonitrile or a mixture thereof
and
a₂₂₃) from 0 to 10 % by weight of a monomer having carboxyl, carboxyl derivative, hydroxyl or epoxy groups
and
a₃) from 10 to 25 % by weight of a copolymer of
a₃₁) from 55 to 90 % by weight of styrene or substituted styrene of the general formula I or of mixtures thereof and
a₃₂) from 10 to 45 % by weight of acrylonitrile or methacrylonitrile or a mixture thereof,
a₃₃) from 0 to 10 % by weight of a monomer having carboxyl, carboxyl derivative, hydroxyl or epoxy groups
and
B) from 5 to 50 % by weight of glass fibers, with the proviso that the proportion of component a₃₂), based on the total weight of component a₃), is lower by not less than 5 % by weight than the weight proportion of component a₂₂₂), based on the total weight of component a₂₂).

2. A thermoplastic molding composition as claimed in claim 1, containing as essential components
A) from 55 to 80 % by weight of a mixture of
a₁) from 50 to 80 % by weight of polyethylene terephthalate or polybutylene terephthalate or a mixture thereof
a₂) from 10 to 25 % by weight of a graft polymer built up from
a₂₁) from 50 to 90 % by weight of a grafting base based on
a₂₁₁) from 95 to 99.9 % by weight of a n-butyl acrylate and/or 2-ethyhexyl acrylate
and
a₂₁₂) from 0.1 to 5 % by weight of a difunctional monomer
and
a₂₂) from 10 to 50 % by weight of a graft surface comprising
a₂₂₁) from 50 to 90 % by weight of styrene or α-methylstyrene or a mixture thereof
and
a₂₂₂) from 10 to 50 % by weight of acrylonitrile or methacrylonitrile or a mixture thereof and
a₃) from 10 to 25 % by weight of a copoplymer of a₃₁) from 55 to 90 % by weight of styrene or α-methylstyrene or of mixtures thereof and a₃₂) from 10 to 45 % by weight of acrylonitrile or methacrylonitrile or a mixture thereof,
and
B) from 10 to 40 % by weight of glass fibers, with the proviso that the proportion of component a₃₂), based on the total weight of component a₃), is lower by not less than 5 % by weight than the weight proportion of component a₂₂₂), based on the total weight of component a₂₂).

3. Use of a thermoplastic molding composition as claimed in claim 1 or 2 for the production of molded articles and pieces.

4. Molded articles obtainable from a thermoplastic molding composition as claimed in claim 1 or 2 as essential components.

## Revendications

1. Masses à mouler thermoplastiques, contenant, en tant que composants essentiels
A) 45 à 90% en poids d'un mélange
a₁) de 50 à 80% en poids d'un polyester,
a₂) de 10 à 25% en poids d'un polymère greffé, constitué par
a₂₁) 50 à 90% en poids d'une base de greffage composée d'un polymère ayant l'élasticité du caoutchouc, à base de
a₂₁₁) 95 à 99,9% en poids d'un acrylate d'alkyle en C₂-C₁₀ et
a₂₁₂) 0,1 à 5% en poids d'un monomère polyfonctionnel, comportant au moins deux doubles liaisons oléfiniques non conjuguées,
a₂₂) 10 à 50% en poids d'un greffon composé de
a₂₂₁) 50 à 90% en poids de styrène ou de styrènes substitués de formule générale I 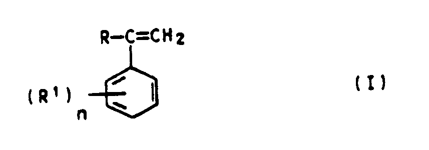 dans laquelle R représente un reste alkyle à 1-8 atomes de carbone, un atome d'hydrogène ou un atome d'halogène, R¹ représente un reste alkyle à 1-8 atomes de carbone ou un atome d'halogène et n a la valeur 0, 1, 2 ou 3, ou de mélanges de ces styrènes,
a₂₂₂) 10 à 50% en poids d'acrylonitrile, de méthacrylonitrile ou de mélanges de ceux-ci et
a₂₂₃) 0 à 10% en poids de monomères contenant des groupements carboxyle, dérivés de carboxyle, hydroxy ou époxy,
et
a₃) de 10 à 25% en poids d'un copolymère de
a₃₁) 55 à 90% en poids de styrène, de styrènes substitués de formule générale I ou de mélanges de ceux-ci,
a₃₂) 10 à 45% en poids d'acrylonitrile, de méthacrylonitrile ou de mélanges de ceux-ci,
a₃₃) 0 à 10% en poids de monomères contenant des groupements carboxyle, dérivés de carboxyle, hydroxy ou époxy,
et
B) 5 à 50% en poids de fibres de verre
étant spécifié que la part du composant a₃₂), par rapport au poids total du composant a₃), est inférieure d'au moins 5% en poids à la part en poids du composant a₂₂₂), par rapport au poids total du composant a₂₂).

2. Masses à mouler thermoplastiques selon la revendication 1, contenant, en tant que composants essentiels
A) 55 à 90% en poids d'un mélange
a₁) de 50 à 80% en poids de polytéréphtalate d'éthylène, de polytéréphtalate de butylène ou de mélanges de ceux-ci,
a₂) de 10 à 25% en poids d'un polymère greffé, constitué par
a₂₁) 50 à 90% en poids d'une base de greffage à base de
a₂₁₁) 95 à 99,9% en poids d'acrylate de n-butyle et/ou d'acrylate de 2-éthylhexyle
a₂₁₂) 0,1 à 5% en poids du monomère difonctionnel, et
a₂₂) 10 à 50% en poids d'un greffon composé de
a₂₂₁) 50 à 90% en poids de styrène, d'α-méthylstyrène ou de mélanges de ceux-ci et
a₂₂₂) 10 à 50% en poids d'acrylonitrile, de méthacrylonitrile ou de mélanges de ceux-ci
et
a₃) de 10 à 25% en poids d'un copolymère de
a₃₁) 55 à 90% en poids de styrène, d'α-méthylstyrène ou de mélanges de ceux-ci,
a₃₂) 10 à 45% en poids d'acrylonitrile, de méthacrylonitrile ou de mélanges de ceux-ci,
et
B) 10 à 40% en poids de fibres de verre
étant spécifié que la part du composant a₃₂), par rapport au poids total du composant a₃), est inférieure d'au moins 5% en poids à la part en poids du composant a₂₂₂), par rapport au poids total du composant a₂₂).

3. Utilisation des masses à mouler thermoplastiques selon la revendication 1 ou 2 pour la fabrication de corps moulés et de pièces moulées.

4. Corps moulés, obtenus à partir de masses à mouler thermoplastiques selon la revendication 1 ou 2 en tant que composant essentiel.
